Europäisches Patentamt

European Patent Office

Office européen des brevets

(19)

(11) Numéro de publication: **0 060 766**
**B1**

(12) **FASCICULE DE BREVET EUROPEEN**

(45) Date de publication du fascicule du brevet:
**17.09.86**

(51) Int. Cl.⁴: **G 01 G 3/14**, G 01 L 1/22

(21) Numéro de dépôt: **82400404.8**

(22) Date de dépôt: **08.03.82**

(54) Dispositif capteur de force pour appareil de mesure.

(30) Priorité: **17.03.81 FR 8105281**

(43) Date de publication de la demande:
**22.09.82 Bulletin 82/38**

(45) Mention de la délivrance du brevet:
**17.09.86 Bulletin 86/38**

(84) Etats contractants désignés:
**AT BE CH DE FR GB IT LI NL SE**

(56) Documents cités:
**FR - A - 2 386 024**
**FR - A - 2 431 689**
**US - A - 3 495 669**

(73) Titulaire: **ESSELTE MOREAU, 106 Bis, Avenue
Beaurepaire, F-94100 Saint Maur (FR)**

(72) Inventeur: **Alexandre, Claude, 12, Avenue de Versailles,
F-75016, Paris (FR)**

(74) Mandataire: **Rinuy, Santarelli et al, 14, avenue de la
Grande Armée, F-75017 Paris (FR)**

ACTORUM AG

## Description

La présente invention concerne un dispositif capteur de force pour appareil de mesure tel qu'un instrument de pesage.

Les instruments de pesage à plateaux comportant des bras formant un parallélogramme articulé sont coûteux et fragiles. On a donc réalisé des dispositifs capteurs de force constitués par un bloc métallique parallélépipédique présentant des ouvertures et des fentes définissant des sections amincies de moindre résistance aux déformations mécaniques dont on mesure la déformation sous l'action de la masse à peser, avec par exemple une jauge de contrainte.

Les dispositifs capteurs de force du type précité comportent généralement une plage d'appui en porte-à-faux située à une extrémité du bloc sur sa face inférieure et une plage de réception de la force à mesurer située sur sa face supérieure au voisinage de l'extrémité opposée.

L'inconvénient principal de ces dispositifs capteurs réside en ce qu'ils sont sensibles aux moments de flexion créés par les forces excentrées.

On trouve à l'heure actuelle des dispositifs visant à remédier à ces inconvénients. Mais ceux-ci sont généralement constitués de matériaux de nature différente, exigent des variations d'épaisseur transversales et nécessitent des usinages compliqués. Leur réalisation se révèle toujours difficile et onéreuse. De tels dispositifs sont notamment décrits dans les documents FR-2 386 024, FR-2 431 689, US-3 495 669 ou EP-A-0 015 337.

C'est pourquoi la présente invention a pour objet de proposer un dispositif capteur de force du type précité permettant des mesures précises indépendantes de la position de la charge sur la plage de réception de la force à mesurer, dont la réalisation soit simple et peu coûteuse.

La présente invention propose à cet effet, par analogie au document FR-2 386 024 précité, et conformément au préambule de la revendication 1, un dispositif capteur de forces qui est caractérisé par les caractéristiques techniques figurant dans la partie caractérisante de cette revendication.

Dans le dispositif suivant l'invention, la première zone amincie médiane déterminée par les premières ouvertures supérieure et inférieure n'est soumise qu'aux composantes verticales des forces exercées sur la plage de réception desdites forces, ce qui rend le dispositif capteur insensible aux effets des charges excentrées.

Suivant un premier mode de réalisation, le dispositif suivant l'invention est caractérisé en ce que les fentes verticales ont une forme parallélépipédique et sont parallèles entre elles.

Suivant un deuxième mode de réalisation, chaque fente verticale est constituée par deux canaux sensiblement cylindriques dont les axes sont parallèles et situés dans un même plan vertical, lesdits canaux se recoupant suivant deux arêtes internes transversales.

L'invention sera mieux comprise à la lecture de la description détaillée qui va suivre et à l'examen des dessins annexés qui représentent, à titre d'exemple non limitatif, deux modes de réalisation de l'invention;

– la fig. 1 est une vue latérale d'un dispositif capteur de force suivant un premier mode de réalisation de l'invention; et

– la fig. 2 est une vue latérale d'un dispositif capteur de force suivant un deuxième mode de réalisation de l'invention.

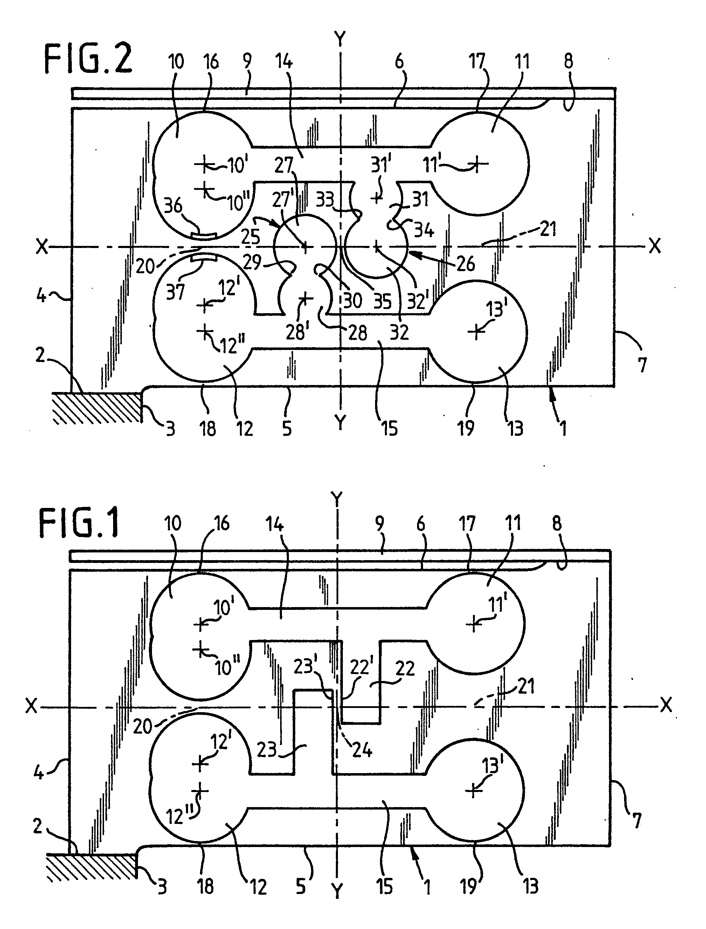

Un capteur de force tel que représenté sur les figs 1 et 2 est constitué par un bloc métallique homogène 1 ayant la forme d'un parallélépipède rectangle dont la largeur mesurée le long d'un axe horizontal X–X est supérieure à la hauteur mesurée le long d'un axe vertical Y–Y, elle-même supérieure à l'épaisseur mesurée le long d'un axe transversal Z–Z perpendiculaire aux précédents. Ledit bloc 1 est sensiblement symétrique par rapport à ces trois axes. Il admet une face avant, une face arrière, un premier flanc vertical 4, un flanc inférieur 5, un second flanc vertical 7 et un flanc supérieur 6. Sur le flanc inférieur 5, près du premier flanc vertical 4, est ménagée une plage d'appui 2 équipée de tous moyens appropriés (non représentés) pour assurer la fixation en porte-à-faux du bloc 1 sur le support 3. Sur le flanc supérieur 6, près du second flanc vertical 7, est ménagée une plage de réception 8 à laquelle est liée une plaque 9 de réception et d'application de la force à mesurer.

Le bloc 1 comporte une première ouverture transversale supérieure 10, une première ouverture transversale inférieure 12 près du premier flanc vertical 4, et une seconde ouverture transversale supérieure 11 et une seconde ouverture transversale inférieure 13 près du second flanc vertical. Les ouvertures transversales sont disposées en un arrangement rectangulaire. Les ouvertures supérieures 10, 11 sont reliées par une fente horizontale supérieure 14; elles déterminent avec le flanc supérieur 6 du bloc 1 une première zone amincie supérieure 16 et une seconde zone amincie supérieure 17. Les ouvertures inférieures 12; 13 sont reliées par une fente horizontale inférieure 15; elles déterminent avec le flanc inférieur 5 du bloc 1 une première zone amincie inférieure 18 et une seconde zone amincie inférieure 19. Ces zones amincies supérieures et inférieures ont une même épaisseur selon l'axe Y–Y. Les premières 10, 12 et les secondes ouvertures 11, 13 déterminent entre elles, respectivement, une première zone amincie médiane 20 et une seconde zone amincie médiane 21, qui sont symétriques par rapport au plan horizontal des axes X–X et Z–Z.

Les premières ouvertures 10 et 12 ont avantageusement des dimensions plus importantes que les secondes ouvertures 11 et 13, de manière à ce que la première zone amincie médiane 20 ait une épaisseur plus faible que la seconde zone amincie médiane 21. On augmente ainsi la sensibilité du bloc 1 tout en conservant une bonne rigidité.

Les secondes ouvertures transversales 11 et 13 sont constituées de canaux cylindriques admettant des axes 11′ et 13′ parallèles et situés dans un même plan vertical. Chaque première ouverture 10, 12 est de préférence constituée par deux canaux cylindriques sécants admettant des axes 10′, 10″ pour l'ouverture 10 et 12′, 12″ pour l'ouverture 12, qui sont parallèles et situés dans un même plan vertical.

Le bloc 1 comporte également deux fentes verticales décalées horizontalement de part et d'autre de l'axe vertical Y–Y et situées entre les fentes horizontales. Une première fente verticale 23, 25 débouche dans la fente horizontale inférieure 15 au voisinage de la première ouverture transversale inférieure 12, et une seconde fente verticale 22, 26 débouche dans la fente horizontale supérieure 14 au voisinage de la seconde ouverture transversale supérieure 11. Ces fentes verticales déterminent entre elles une zone amincie verticale unique 24, 35 de moindre résistance, symétrique par rapport à chacun des axes X–X, Y–Y et Z–Z.

Aucune réduction de section n'est effectuée selon l'axe Z–Z.

Dans le mode de réalisation représentée sur la fig. 1, les fentes verticales 22, 23 ont une forme parallélépipédique et sont parallèles. Elles définissent une zone amincie unique dont l'épaisseur mesurée selon l'axe X–X est constante.

Sur la fig. 2, les fentes verticales sont formées uniquement par des canaux transversaux cylindriques. La première fente verticale 25 est constituée par un premier canal médian 27 et un canal inférieur 28 recoupant ledit premier canal selon deux premières arêtes internes transversales 29, 30, tandis que la seconde fente verticale 26 est constituée par un second canal médian 32 et un canal supérieur 31 recoupant ledit second canal médian selon deux secondes arêtes internes transversales 33, 34. Les axes 27′, 28′, 31′, 32′ des deux canaux de chaque fente verticale sont parallèles à l'axe Z–Z et sont situés dans deux plans verticaux symétriques par rapport au plan des axes Y–Y et Z–Z. Les axes 27′, 32′ des canaux médians passent par l'axe X–X de symétrie des zones amincies médianes 20, 21. Ces canaux médians 27 et 32 ont un diamètre supérieur à celui des canaux inférieur 28 et supérieur 31, et déterminent entre eux une zone amincie 35 symétrique par rapport aux axes X–X, Y–Y et Z–Z, dont l'épaisseur mesurée le long de l'axe X–X est minimale dans le plan des axes X–X et Z–Z.

De manière classique, des jauges de contrainte 36, 37 montées dans les premières ouvertures 10 et 12 et associées à un circuit électrique approprié (non représenté) délivrent un signal proportionnel aux seuls efforts verticaux à mesurer qui provoquent une déformation en parallélogramme du bloc.

Dans le sens de l'épaisseur, le long de l'axe Z–Z, le bloc 1 a été suffisamment dimensionné de façon à rendre négligeable, par l'importance de son moment d'inertie, les effets des moments, engendrés par une charge transversalement désaxée.

Il est à noter que certaines caractéristiques de la mesure sont affectées par le rapport entre les dimensions des zones amincies supérieures 16, 17, et inférieures 18, 19 du cadre du parallélogramme d'une part et celles des zones amincies médianes 20, 21, 35 ou 24 des parties centrales d'autre part. On peut donc, par variation de ces dimensions, obtenir des performances différentes de ce capteur, adaptée aux besoins de l'utilisateur.

La conception d'un capteur de force selon l'invention, doté d'une seule zone verticale amincie, sans amincissement dans le sens de l'axe Z–Z, conduit à une réduction sensible des opérations de fabrication, et donc du coût de celle-ci, par rapport aux dispositifs déjà connus. Cette facilité de fabrication est d'ailleurs renforcée du fait que les deux modes préférés de réalisation illustrés par les figs 1 et 2 ne nécessitent, pour les fentes verticales, qu'un seul type d'usinage correspondant respectivement à des fentes parallélépipédiques ou à des canaux transversaux cylindriques. Or, cette simplification astucieuse de la structure de la zone verticale amincie unique, s'est révélée ne pas perturber l'élimination des forces excentrées par rapport à ce que propose par exemple le document FR-2 386 024.

Bien entendu, l'invention n'est nullement limitée aux modes de réalisation de l'exemple décrit et représenté, elle est susceptible de nombreuses variantes accessibles à l'homme de l'art, suivant les applications envisagées et sans s'écarter pour cela du cadre de l'invention. En particulier, la fixation du capteur sur son support et la liaison sur le capteur de la plaque d'application de la force à mesurer peuvent être effectuées par l'intermédiaire des flancs verticaux ou à leur voisinage sans sortir du cadre de l'invention.

**Revendications**

1. Dispositif capteur de forces pour appareil de mesure, tel qu'un instrument de pesage, comprenant un bloc homogène parallélépipédique (1) sensiblement symétrique par rapport à trois axes (X–X, Y–Y, Z–Z) perpendiculaires entre eux, respectivement horizontal, vertical et transversal, et présentant une face avant et une face arrière perpendiculaires à l'axe transversal (Z–Z), un flanc inférieur (5) et un flanc supérieur (6) perpendiculaires à l'axe vertical (Y–Y), et un premier (4) et un second (7) flanc vertical perpendiculaires à l'axe horizontal (X–X), ainsi que des moyens de fixation (2) dudit bloc sur un support (3) au voisinage du premier flanc vertical (4) et des moyens de liaison (8) à une plaque de réception (9) de la force à mesurer au voisinage du second flanc vertical (7) dans ledit bloc étant ménagées, sans amincissement selon l'axe transversal (Z–Z), près du premier flanc vertical (4), une première ouverture transversale supérieure (10) et une première ouverture transversale inférieure (1) déterminant une première zone amincie médiane (20), et près du second flanc vertical (7), une seconde ouverture transversale supérieure (11) et une seconde ouverture transversale inférieure (13) déterminant une seconde zone amincie médiane (21), lesdites zones amincies médianes (20, 21) étant symétriques par rapport à l'axe horizontal (X–X), lesdites ouvertures supérieures et inférieures étant reliées respectivement par des fentes horizontales supérieure (14) et inférieure (15), ledit bloc comportant également entre lesdites fentes horizontales (14, 15) une première fente verticale (23, 25) débouchant dans la fente horizontale inférieure (15) et une seconde fente verticale (22, 26) débouchant dans la fente horizontale supérieure (14), lesdites fentes verticales (22, 23; 25, 26) étant décalées horizontalement et déterminant entre elles une zone amincie verticale (24; 35) de moindre résistance, caractérisé en ce que cette zone amincie verticale de moindre résistance présente selon l'axe horizontal (X–X) un minimum d'épaisseur qui est unique.

2. Dispositif selon la revendication 1, caractérisé en ce que les fentes verticales (22, 23) ont une forme parallélépipédique et sont parallèles.

3. Dispositif selon la revendication 1, caractérisé en ce que les première et seconde fentes verticales (25, 26) sont constituées respectivement de deux canaux sécants inférieur (28) et médian (27) et de deux canaux sécants médian (32) et supérieur (31), ces canaux étant sensiblement cylindriques, les axes (27', 28'; 31', 32') des canaux de chaque fente verticale étant parallèles et situés dans un même plan vertical.

4. Dispositif selon la revendication 3, caractérisé en ce que les axes (27', 32') des canaux médians passant par l'axe horizontal (X–X).

5. Dispositif selon l'une quelconque des revendications 1 à 4, caractérisé en ce que les premières ouvertures transversales (10, 12) ont des dimensions plus importantes que les secondes ouvertures (11, 13), la première zone amincie médiane (20) présentant une épaisseur selon l'axe vertical (Y–Y) plus faible que la seconde zone amincie médiane (21).

6. Dispositif selon la revendication 5, caractérisé en ce que les premières ouvertures sont constituées chacune de deux canaux cylindriques sécants de même rayon, leurs axes (10', 10''; 12', 12'') étant parallèles et situés dans un même plan vertical.

**Claims**

1. A force sensing device for measuring apparatus, sich as a weighing instrument, comprising a homogeneous parallelepipedic block (1) substantially symmetrical relative to three axes (X–X, Y–Y, Z–Z) perpendicular to one another, respectively horizontal, vertical and transverse, and presenting a front face and a back face perpendicular to the transverse axis (Z–Z), a lower side (5) and an upper side (6) perpendicular to the vertical axis (Y–Y) and a first (4) and a second (7) vertical side perpendicular to the horizontal axis (X–X), as well as securement means (2) for said block onto a carrier (3) in the neighborhood of the first vertical side (4) and connecting means (8) to a plate (9) for receiving the force to be measured in the neighborhood of the second vertical side (7), in said block being formed without any narrowing according to the transverse axis (Z–Z), close to the first vertical side (4), a first upper transverse opening (10) and a first lower transverse opening (12) determining a first median narrowed zone (20) and, close to the second vertical side (7), a second upper transverse opening (11) and a second lower transverse opening (13) determining a second median narrowed zone (21), said median narrowed zones (20, 21) being symmetrical relative to the horizontal axis (X–X), said upper and lower openings being respectively connected through upper (14) and lower (15) horizontal slots, said block also comprising between said horizontal slots (14, 15) a first vertical slot (23, 25) opening into the lower horizontal slot (15) and a second vertical slot (22, 26) opening into the upper horizontal slot (14), said vertical slots (22, 23, 25, 26) being horizontally offset and determining between one another a vertical narrowed zone (24, 35) of lesser strength, characterized in that such vertical narrowed zone of lesser strength presents, according to the horizontal axis (X–X), a thickness minimum which is unique.

2. A device according to claim 1, characterized in that the vertical slots (22, 23) have a parallelepipedic shape and are parallel to one another.

3. A device according to claim 1, characterized in that the first and second vertical slots (25, 26) are respectively formed by two lower (28) and median (27) intersecting channels and two median (32) and upper (31) intersecting channels, such channels being substantially cylindrical, the axes (27', 28', 31' and 32') of the channels of each vertical slot being parallel to one another and lying in the same vertical plane.

4. A device according to claim 3, characterized in that the axes (27', 32') of the median channels pass through the horizontal axis (X–X).

5. A device according to any one of claims 1 to 4, characterized in that the first transverse openings (10, 12) have larger dimensions than the second openings (11, 13), the first median narrowed zone (20) having a thickness according to the vertical axis (Y–Y) which is smaller than that of the second median narrowed zone (21).

6. A device according to claim 5, characterized in that the first openings each consist of two cylindric intersecting channels of the same radius, their axes (10', 10'', 12', 12'') being parallel to one another and lying in the same vertical plane.

**Patentansprüche**

1. Kraftsensoreinrichtung für ein Messgerät, wie ein Instrument zum Wägen, umfassend einen homogenen, parallelepipedischen Block (1), der in bezug auf drei zueinander senkrechte Achsen (X–X, Y–Y, Z–Z), von denen eine horizontal, eine vertikal und eine transversal ist, genau symmetrisch ist und der eine zur transversalen Achse (Z–Z) senkrechte Vorderseite und eine ebensolche Hinterseite sowie eine zur vertikalen Achse (Y–Y) senkrechte untere Flanke (5) und eine ebensolche obere Flanke (6) aufweist und ferner auch eine erste (4) und eine zweite (7) vertikale, zur horizontalen Achse (X–X) senkrechte Flanke sowie der ersten vertikalen Flanke (4) benachbarte Mittel (2) zur Befestigung des besagten Blocks auf einem Support (3) und der zweiten vertikalen Flanke (7) benachbarte Mittel (8) zur Verbindung mit einer die zu messende Kraft aufnehmenden Platte (9), wobei in besagtem Block, ohne Abdünnung in Richtung der transversalen Achse (Z–Z), nahe der ersten vertikalen Flanke (4) ein erster transversaler oberer Durchlass (10) und ein erster transversaler unterer Durchlass (12) vorgesehen sind, welche eine erste abgedünnte mittlere Zone (20) bestimmen, und nahe der zweiten vertikalen Flanke (7) ein zweiter transversaler oberer Durchlass (11) und ein zweiter transversaler unterer Durchlass (13), welche eine zweite abgedünnte mittlere Zone (21) bestimmen, wobei die besagten abgedünnten mittleren Zonen (20, 21) symmetrisch in bezug auf die horizontale Achse (X–X) sind, die besagten oberen und unteren Durchlässe durch horizontale obere (14) bzw. untere (15) Spalte verbunden sind, der besagte Block zwischen den besagten horizontalen Spalten (14, 15) auch einen ersten vertikalen, in den horizontalen unteren Spalt (15) mündenden Spalt (23; 25) und einen zweiten vertikalen, in den horizontalen oberen Spalt (14) mündenden Spalt (22; 26) aufweist, die besagten vertikalen Spalte (22, 23; 25, 26) gegeneinander horizontal versetzt angeordnet sind und zwischen sich eine abgedünnte vertikale Zone (24, 35) geringeren Widerstands bilden, dadurch gekennzeichnet, dass diese abgedünnte vertikale Zone geringeren Widerstands in Richtung der horizontalen Achse (X–X) ein Minimum an Dicke aufweist, welche Zone einzig ist.

2. Einrichtung nach Anspruch 1, dadurch gekennzeichnet, dass die vertikalen Spalte (22, 23) eine parallelepipedische Form haben und parallel sind.

3. Einrichtung nach Anspruch 1, dadurch gekennzeichnet, dass die ersten und zweiten vertikalen Spalte (25, 26) durch zwei sich schneidende untere (28) und mittlere (27) Kanäle bzw. zwei sich schneidende mittlere (32) und obere (31) Kanäle gebildet sind, welche Kanäle genau zylindrisch sind, wobei die Achsen (27', 28'; 31', 32') der Kanäle jedes vertikalen Spaltes parallel sind und in derselben vertikalen Ebene liegen.

4. Einrichtung nach Anspruch 3, dadurch gekennzeichnet, dass die Achsen (27', 32') der mittleren Kanäle die horizontale Achse (X–X) schneiden.

5. Einrichtung nach irgendeinem der Ansprüche 1 bis 4, dadurch gekennzeichnet, dass die ersten transversalen Durchlässe (10, 12) grössere Dimensionen haben als die zweiten Durchlässe (11, 13), und die erste abgedünnte mittlere Zone (20) im Sinne der vertikalen Achse (Y–Y) eine wesentlich schwächere Dicke aufweist als die zweite abgedünnte mittlere Zone (21).

6. Einrichtung nach Anspruch 5, dadurch gekennzeichnet, dass jeder der ersten Durchlässe durch zwei sich schneidende zylindrische Kanäle gleichen Radius gebildet ist, deren Achsen (10', 10''; 12', 12'') parallel sind und in derselben vertikalen Ebene liegen.

# FIG.2

# FIG.1